# EUROPÄISCHE PATENTSCHRIFT

(11) **EP 1 031 270 B1**
(45) Veröffentlichungstag und Bekanntmachung des Hinweises auf die Patenterteilung: **19.11.2003**
(21) Anmeldenummer: 00102610.3
(22) Anmeldetag: 08.02.2000
(51) Int. Cl.: A01F 7/06

(54) **Axialtrennvorrichtung für einen Mähdrescher**
Axial flow separator for a combine
Dispositif séparateur à écoulement axial pour moissonneuse-batteuse

(30) Priorität: 24.02.1999 US 256109
(43) Veröffentlichungstag der Anmeldung: 30.08.2000
(73) Patentinhaber: DEERE & COMPANY, Moline, Illinois 61265-8098 (US)
(72) Erfinder: Pfeiffer, Dohn William, Davenport, IA 52807 (US); Gerber, Merle Ray, Moline, IL 61265 (US)
(74) Vertreter: Holst, Sönke, Dr.

(56) Entgegenhaltungen:
- EP-A- 0 124 628
- WO-A-97/07660
- GB-A- 2 032 748
- SU-A- 1 500 194

## Beschreibung

Die Erfindung bezieht sich auf eine Axialtrennvorrichtung für einen Axialmähdrescher, mit einer in einer Drehrichtung in Drehung versetzbaren Trommel, die einen Auslassabschnitt zum Auslassen von Erntegut aufweist, und mit einer Leiteinrichtung zum Führen von ausgelassenem Erntegut, die an der Seite der Trommel angebracht ist, an der sich die Trommel nach unten bewegt, wenn sie sich in der Drehrichtung dreht, und eingerichtet ist, den Fluß des Ernteguts zu leiten, der an der Seite der Trommel ausgelassen wird, an der sich die Trommel nach unten bewegt, wenn sich die Trommel in der Drehrichtung dreht, wobei die Leiteinrichtung mindestens eine Kante zur Führung des Ernteguts aufweist.

Landwirtschaftliche Mähdrescher sind große Maschinen, die landwirtschaftliches Gut ernten, dreschen, trennen und reinigen. Das dabei gewonnene saubere Getreide wird in einem am Mähdrescher befindlichen Korntank für sauberes Getreide gespeichert. Das saubere Korn kann dann vom Korntank durch einen Entladeförderer in einen Lastwagen, Anhänger oder ein anderes Aufnahmebehältnis verbracht werden.

Axialmähdrescher haben ein oder zwei große Axialtrennvorrichtungen, die entlang der Längsachse der Maschine angeordnet sind, um das geerntete Gut zu dreschen und zu trennen. Diese Rotoren sind mit einem Beschickungsabschnitt zum Aufnehmen des geernteten Gutes, einem Dreschabschnitt zum Dreschen des vom Beschickungsabschnitt erhaltenen Erntegutes, einem Trennabschnitt zum Befreien im gedroschenen Erntegutmaterial gefangenen Korns, das vom Dreschabschnitt erhalten wird, sowie einem Auslassabschnitt zum Auslassen von Erntegut, das kein Korn enthält, aus der Axialtrennvorrichtung versehen.

Das Erntegut wird dem Beschickungsabschnitt von einem Schrägförderer zugeführt. Das Erntegut ist in Form einer Gutmatte angeordnet, die die Beschickungselemente des Rotors aufnehmen und in einen spiralwendelförmigen Fluß verbringen müssen. Der wendelförmige Fluß des Ernteguts bewegt sich vom Beschickungsabschnitt in den Dreschabschnitt und dann in den Trennabschnitt. Im Erntegut enthaltenes Korn und Spreu wird durch die Axialtrennvorrichtung daraus entfernt und fällt durch am Boden der Axialtrennvorrichtung angeordnete Roste. Erntegut, das kein Korn mehr enthält, wie Stroh, tritt vom Trennabschnitt in den Auslassabschnitt ein. Der Auslassabschnitt wirft dann das von Korn befreite Erntegut an der Rückseite des Mähdreschers aus oder führt es einem an der Rückseite des Mähdreschers angeordneten Strohhäcksler zu.

Es ist wichtig, das vom Korn befreite Erntegut in einem in seitlicher Richtung gleichförmigen Schwad an der Rückseite des Mähdreschers auszuwerfen, um mit dem abgelegten Erntegut besser wirtschaften zu können. Gegenwärtige Axialmähdrescher benützen spezielle Auswurfelemente am Rotor, um das Erntegut einer quer angeordneten Abgabetrommel zuzuführen. Bei dieser Art der Auslassanordnung ist es problematisch, sowohl exzellente Materialauswurfcharakteristiken als auch exzellente Querverteilungen bei einer großen Vielfalt an Erntegütern und Erntegutbedingungen bereitzustellen. Entweder hat der Mähdrescher eine sehr gute Materialauswurfcharakteristik und schlechte Querverteilung, oder umgekehrt.

In der GB 2 032 748 A wird ein Axialflussmähdrescher beschrieben, bei dem unterhalb des Auslassbereichs des Rotors eine Ablenkplatte angeordnet ist, die zum Verlangsamen der ausgestoßenen Erntegutreste dient, bevor sie auf den Erdboden fallen. Eine Führung der Erntegutreste in seitlicher Richtung ist durch die Ablenkplatte nicht möglich.

Die EP 0 514 820 A zeigt einen anderen Axialmähdrescher, bei dem zwei Trennrotoren einer quer angeordneten Dreschtrommel nachgeordnet sind. Unterhalb des hinteren Bereichs des Auslasses der Trennrotoren ist ein Deflektor mit der Form eines umgekehrten U angeordnet, um das Stroh zu den außenliegenden Rändern der Trennrotoren abzulenken, damit eine gleichmäßigere Verteilung des Strohs im Mähdrescher erreicht wird. Durch die Form des Deflektors mit einer geraden unteren Kante erzielt man jedoch das Ergebnis, dass im mittleren Bereich zwischen den Trennrotoren kein Stroh abgegeben wird, so dass die Verteilung in seitlicher Richtung nicht gleichmäßig ist.

Das der Erfindung zugrunde liegende Problem besteht darin, die Materialabgabeeigenschaften und die Querverteilungscharakteristik einer Auslassanordnung zu verbessern.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Erfindungsgemäß ist unterhalb des Auslassabschnitts des Rotors an der Seite des Rotors, die bezüglich seiner Drehrichtung nach unten gewandt ist, eine Leiteinrichtung angeordnet. Diese Leiteinrichtung wird mit Erntegut beaufschlagt, das von der Trommel nach unten ausgeworfen wird, führt es vom wendelförmigen Fluß in der Axialtrennvorrichtung in einen geradlinigen Fluß über und leitet es vorzugsweise einer Ausgabetrommel zu, obwohl auch eine direkte Ablage auf dem Boden oder Zuführung zu einem Strohhäcksler, ohne Zwischenschalten einer Abgabetrommel denkbar wäre. Das Erntegut, mit dem die Leiteinrichtung beaufschlagt wird, ist in der Regel durch die Axialtrennvorrichtung schon vom Korn befreit. Die Leiteinrichtung ist mit wenigstens einer Kante und vorzugsweise auch einer Fläche zur Führung des Ernteguts versehen, an der es entlanggleitet. Der Wirkungsgrad der Leiteinrichtung variiert über ihre Länge.

Vorzugsweise ist unterhalb des Auslassabschnitts ein Boden vorgesehen, an dem wenigstens eine Kufe und/oder ein Leitblech zum Leiten des vom Rotor ausgeworfenen Ernteguts angebracht ist. Insbesondere kann eine Kufe dazu dienen, das von der Leiteinrichtung geführte Erntegut zu leiten.

Die Trommel kann in an sich bekannter Weise mit einem Beschickungsabschnitt, einem Dreschabschnitt und/oder einem Trennabschnitt ausgestattet sein. Es wäre somit denkbar, sie stromab einer konventionellen Dreschtrommel anzuordnen, so dass der Dreschabschnitt entfällt und der Trennabschnitt mit Erntegut aus dem Beschickungsabschnitt beaufschlagt wird.

Weiterhin ist vorgeschlagen, dass die Trommel im Auslassabschnitt mit Gutmitnehmerelementen versehen ist, die gleichartig mit Gutmitnehmerelementen im Trennabschnitt sind, um eine Unterbrechung des wendelförmigen Flusses des Ernteguts beim Übergang vom Trenn- in den Auslassabschnitt zu vermeiden. Dadurch wird der spiralförmige Fluß des Ernteguts, aus dem das Korn ausgeschieden ist, gleichförmiger.

Die Leiteinrichtung kann insbesondere als dreieckförmige Leiteinrichtung ausgeführt sein. Erstreckt sie sich in etwa vertikaler Richtung, so steigt (bzw. sinkt) ihre wirksame Breite mit der Höhe an, so dass sich ein mit dem Auswurfwinkel, unter dem das Erntegut vom Rotor ausgeworfen wird, sukzessive ändernder Wirkungsgrad ergibt.

Außerdem kann die Leiteinrichtung zwei übereinander angeordnete, untereinander einen Winkel einschließende Kanten oder Flächen aufweisen, die dazu dienen, das Erntegut in unterschiedliche Richtungen - und somit über einen größeren Winkelbereich - zu streuen. Zur Anpassung an die Form der Trommel wird die obere Kante oder Fläche in der Regel steiler als die untere Fläche angeordnet sein.

Als vorteilhaft hat sich ein Boden des Auswurfgehäuses erwiesen, bei dem zwei Kufen vorgesehen sind. Die erste Kufe leitet Erntegut, das über die obere Fläche der Leiteinrichtung strömt, während die zweite Kufe Erntegut führt, das ihr von der unteren Fläche der Leiteinrichtung zugeleitet wird.

Weiterhin kann eine Platte vorgesehen sein, die an der der Leiteinrichtung gegenüberliegenden Seite des Auslassabschnitts angeordnet, also an der bezüglich seiner Drehrichtung nach oben gewandten Seite des Rotors positioniert ist. Diese Platte wird mit Erntegut beaufschlagt, das vom Rotor nach oben ausgeworfen wird, und leitet es insbesondere einer Abgabetrommel zu.

Vorgeschlagen ist weiterhin eine dritte Kufe des Bodens, die zwischen der zweiten Kufe und der Platte angeordnet ist, um an der Unterseite des Auslassabschnitts aus dem Rotor austretendes Erntegut zu führen.

Wie bereits angemerkt, ist in der Regel stromab der Axialtrennvorrichtung eine Abgabetrommel angeordnet, die das vom Korn befreite Erntegut auf dem Erdboden ablegt. Die Leiteinrichtung und vorzugsweise auch die Kufe bzw. Kufen und die Platte leiten das die Trommel verlassende Erntegut der Abgabetrommel zu.

In den Zeichnungen ist ein nachfolgend näher beschriebenes Ausführungsbeispiel der Erfindung dargestellt. Es zeigt:
- Fig. 1: eine Seitenansicht eines landwirtschaftlichen Axialmähdreschers, und
- Fig. 2: eine perspektivische Rückseitenansicht des Auslassabschnitts des Rotors.

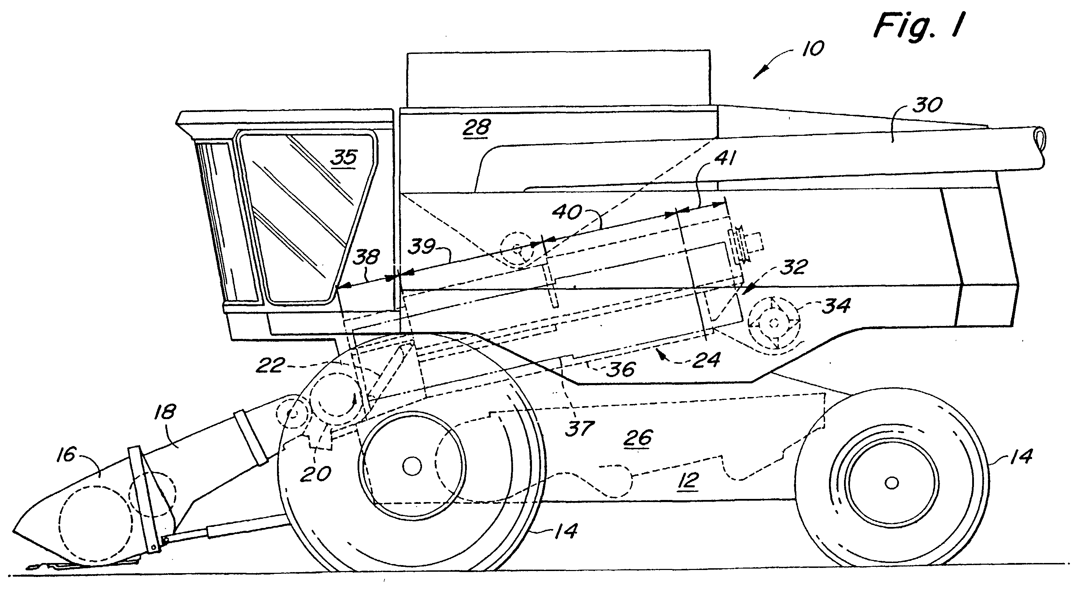

Figur 1 zeigt einen landwirtschaftlichen Mähdrescher 10 mit einem Chassis 12 und sich von diesem erstreckenden Bodenlaufrädern 14. Obwohl der Mähdrescher 10 mit Rädern 14 dargestellt ist, könnte er auch mit zwei oder vier Raupenketten ausgestattet sein. Eine Erntegutbergungsvorrichtung 16 wird verwendet, Erntegut aufzunehmen und es einem Schrägförderer 18 zuzuführen. Das Erntegut wird vom Schrägförderer 18 einer Leittrommel 20 zugeführt. Die Leittrommel 20 leitet das Erntegut nach oben durch einen Einlaßübergangsbereich 22 an eine Axialtrennvorrichtung 24 weiter.

Die Axialtrennvorrichtung 24 drischt und trennt das geerntete Gut. Korn und Spreu fallen durch Roste am Boden der Axialtrennvorrichtung 24 in ein Reinigungssystem 26. Das Reinigungssystem 26 entfernt die Spreu und führt das saubere Korn einem (nicht gezeigten) Kornelevator zu. Der Kornelevator legt das saubere Korn in einem Korntank 28 ab. Das saubere Korn im Korntank 28 kann durch eine Entladeschnecke 30 in einen Anhänger oder Lastwagen entladen werden.

Gedroschenes, vom Korn befreites Stroh wird aus der Axialtrennvorrichtung 24 durch einen Auslaß 32 heraus zu einer Abgabetrommel 34 geführt. Die Abgabetrommel 34 wirft das Stroh am rückwärtigen Ende des Mähdreschers 10 aus. Die Bedienung des Mähdreschers 10 erfolgt von einer Fahrerkabine 35 aus.

Die Axialtrennvorrichtung 24 umfaßt ein zylindrisches Rotorgehäuse 36 und einen im Rotorgehäuse 36 angeordneten Rotor 37. Die in Vorwärtsfahrtrichtung vorderen Teile des Rotors 37 und des Rotorgehäuses 36 definieren den Beschickungsabschnitt 38 der Axialtrennvorrichtung 24. In Längsrichtung des Rotors 37 stromabwärts des Beschickungsabschnitts 38 befindet sich ein Dreschabschnitt 39, ein Trennabschnitt 40, und ein Auslassabschnitt 41. Der Rotor 37 ist im Beschickungsabschnitt 38 mit einer konischen Rotortrommel mit spiralwendelförmigen Beschickungselementen zum Erfassen von Erntegut, das von der Leittrommel 20 und dem Einlaßübergangsbereich 22 empfangen wird, ausgestattet. Unmittelbar stromabwärts des Beschickungsabschnitts 38 ist der Dreschabschnitt 39 der Axialtrennvorrichtung 24. Im Dreschabschnitt 39 umfaßt der Rotor 37 eine zylindrische Rotortrommel 49 mit einer Anzahl an Dreschelementen 50, um das Erntegut zu dreschen, das vom Beschickungsabschnitt 38 empfangen wird. Stromabwärts des Dreschabschnitts 39 ist der Trennabschnitt 40, in dem das im Erntegut gefangene Korn freigesetzt wird und durch ein bodenseitiges Rost in das Reinigungssystem 26 fällt. Der Trennabschnitt 40 geht in einen Auslassabschnitt 41 über, wo Erntegut, das kein Korn enthält, aus der Axialtrennvorrichtung 24 ausgeworfen wird.

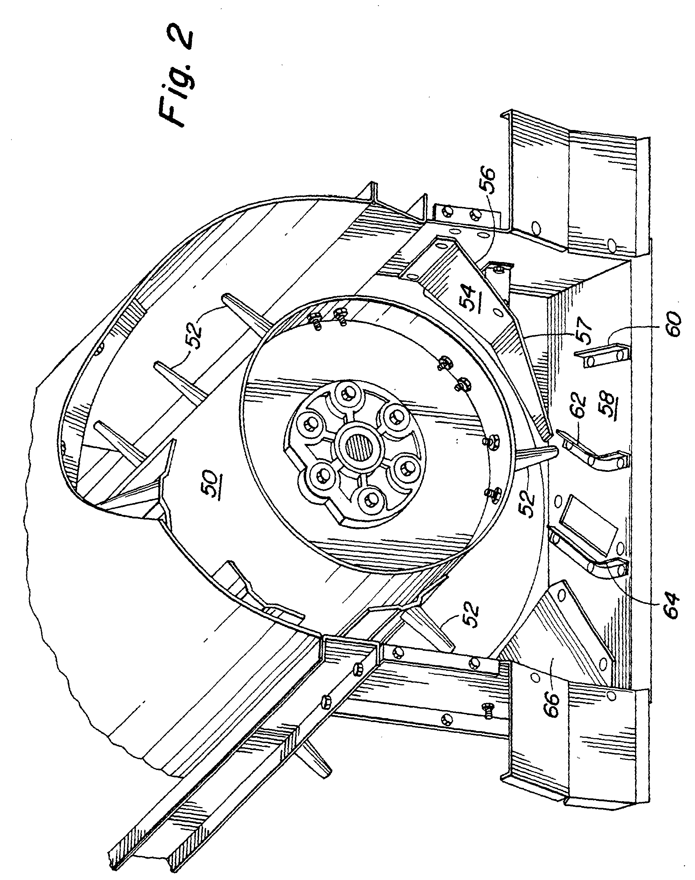

Der Auslassabschnitt 41 der Axialtrennvorrichtung 24 ist in Figur 2 am besten dargestellt. Der Trennabschnitt 40 und der Auslassabschnitt 41 sind mit einer Trommel 50 des Rotors 37 mit Gutmitnehmerelementen 52 ausgestattet. Die Trommel 50 und die Anordnung der Gutmitnehmerelemente 52 sind im Trennabschnitt 40 und im Auslassabschnitt 41 gleich, um ein Zerreißen des wendelförmigen Flusses des vom Korn befreiten Ernteguts zu vermeiden. Betrachtet man Figur 2, dreht sich der Rotor 37 im Uhrzeigersinn, so dass die rechte Seite des Rotorgehäuses 36 die nach unten gekehrte Seite und die linke Seite des Rotorgehäuses 36 die nach oben gekehrte Seite ist.

Die nach unten gekehrte Seite des Auslassabschnitts 41 ist mit einer dreieckigen Leiteinrichtung 54 in Form einer Rampe versehen, die eine obere abgewinkelte Kante 56 und eine untere abgewinkelte Kante 57 aufweist. Die obere abgewinkelte Kante 56 führt den Fluß des Ernteguts, der kein Korn enthält, vom wendelförmigen Fluß im Trennabschnitt 40 der Abgabetrommel 34 zu. Von Korn befreites Erntegut, das von der oberen Kante 56 der Leiteinrichtung 54 herunterfällt, verbleibt auf der rechten (nach unten gekehrten) Seite des Auslassabschnitts 41 und wird zum, in seitlicher Richtung betrachtet, rechten Bereich der Abgabetrommel 34 geleitet.

Der Auslassabschnitt 41 ist außerdem mit einem Boden 58 versehen, der drei Kufen 60, 62 und 64 aufweist, um den Fluß des von Korn befreiten Ernteguts zu steuern. Die erste Kufe 60 hält Erntegut, das über die Kante 56 hinunterfällt, auf der rechten (nach unten gekehrten) Seite des Auslassabschnitts 41. Erntegut, das über die untere Kante 57 fällt, wird ebenfalls geleitet und fließt zwischen der ersten Kufe 60 und der zweiten Kufe 62 hindurch und wird zum rechten (bezüglich ihrer Drehrichtung nach unten gekehrten; s. Figur 1) Mittelabschnitt der Abgabetrommel 34 geführt. Erntegut, welches am Boden des Auslassabschnitts 41 heraustritt, wird ebenfalls geleitet und fließt zwischen der zweiten Kufe 62 und einer dritten Kufe 64 und wird zum linken (bezüglich ihrer Drehrichtung nach oben gekehrten) Mittelabschnitt der Abgabetrommel 34 geführt.

Die nach oben gekehrte Seite des Auslassabschnitts 41 ist mit einer Einlageplatte 66 ausgestattet. Die Einlageplatte 66 ist abgewinkelt, um vom Rotor 37 kommendes, vom Korn befreites Erntegut zur nach oben gekehrten Seite des Auslassabschnitts 41 und zur linken (bezüglich ihrer Drehrichtung nach oben gekehrten) Seite der Abgabetrommel 34 zu stoßen.

Die Leiteinrichtung 54 mit ihren das Erntegut leitenden Kanten 56, 57 verteilt den Fluß des vom Korn befreiten Ernteguts im Zusammenwirken mit den bodenseitigen Kufen 60, 62 und 64 und der Einlageplatte 66 gleichmäßig über die seitliche Breite der Abgabetrommel 34 und erzeugt daher eine gleichmäßigere Verteilung des aus der Rückseite des Mähdreschers 10 oder eines Strohhäckslers austretenden Schwads.

## Patentansprüche

1. Axialtrennvorrichtung (24) für einen Axialmähdrescher (10), mit einer in einer Drehrichtung in Drehung versetzbaren Trommel (50), die einen Auslassabschnitt (41) zum Auslassen von Erntegut aufweist, und mit einer Leiteinrichtung (54) zum Führen von ausgelassenem Erntegut, die an der Seite der Trommel (50) angebracht ist, an der sich die Trommel (50) nach unten bewegt, wenn sie sich in der Drehrichtung dreht, und eingerichtet ist, den Fluß des Ernteguts zu leiten, der an der Seite der Trommel (50) ausgelassen wird, an der sich die Trommel (50) nach unten bewegt, wenn sich die Trommel (50) in der Drehrichtung dreht, wobei die Leiteinrichtung (54) mindestens eine Kante (56, 57) zur Führung des Ernteguts aufweist, **dadurch gekennzeichnet, dass** die Kante (56, 57) derart geformt ist, dass sich ein mit dem Auswurfwinkel, unter dem das Erntegut von der Trommel (50) ausgeworfen wird, sukzessive ändernder Wirkungsgrad der Leiteinrichtung (54) ergibt.

2. Axialtrennvorrichtung (24) nach Anspruch 1, **gekennzeichnet durch** einen unter dem Auslassabschnitt (41) angeordneten Boden (58), an dem wenigstens eine Kufe (60, 62, 64) und/oder ein Leitblech zum Leiten des ausgeworfenen Ernteguts angebracht ist.

3. Axialtrennvorrichtung (24) nach Anspruch 2, **dadurch gekennzeichnet, dass** die Kufe (60, 62, 64) mit von der Leiteinrichtung (54) geführtem Erntegut beaufschlagt wird.

4. Axialtrennvorrichtung (24) nach einem der vorhergehenden Ansprüche, **dadurch gekennzeichnet, dass** die Trommel (50) mit einem Beschickungsabschnitt (38) und/oder Dreschabschnitt (39) und/oder Trennabschnitt (40) ausgestattet ist.

5. Axialtrennvorrichtung (24) nach Anspruch 4, **dadurch gekennzeichnet, dass** die Trommel (50) im Auslassabschnitt (41) mit Gutmitnehmerelementen (52) versehen ist, die gleichartig mit Gutmitnehmerelementen (52) im Trennabschnitt (40) sind.

6. Axialtrennvorrichtung (24) nach einem der vorhergehenden Ansprüche, **dadurch gekennzeichnet, dass** die Leiteinrichtung (54) dreieckförmig ist.

7. Axialtrennvorrichtung (24) nach einem der vorhergehenden Ansprüche, **dadurch gekennzeichnet, dass** die Leiteinrichtung (54) zwei übereinander angeordnete, einen Winkel einschließende Kanten (56, 57) aufweist, wobei die obere Kante (56) vorzugsweise steiler als die untere Kante (57) angeordnet ist.

8. Axialtrennvorrichtung (24) nach Anspruch 7, **dadurch gekennzeichnet, dass** der Boden (58) mit einer zweiten Kufe (62) ausgestattet ist, dass die erste Kufe (60) Erntegut leitet, das über die obere Kante (56) strömt, und dass die zweite Kufe (62) Erntegut leitet, das über die untere Kante (57) strömt.

9. Axialtrennvorrichtung (24) nach einem der vorhergehenden Ansprüche, **gekennzeichnet durch** eine Platte (66), die mit von der Trommel (50) nach oben ausgeworfenem Erntegut beaufschlagt wird.

10. Axialtrennvorrichtung (24) nach Anspruch 9, **dadurch gekennzeichnet, dass** der Boden (58) mit einer dritten Kufe (64) ausgestattet ist, die zwischen der zweiten Kufe (62) und der Platte (66) angeordnet ist, um an der Unterseite des Auslassabschnitts (41) austretendes Erntegut zu führen.

11. Axialtrennvorrichtung (24) nach einem der vorhergehenden Ansprüche, **dadurch gekennzeichnet, dass** das Erntegut vom Auslassabschnitt (41) einer Abgabetrommel (34) zugeführt wird, geführt durch die Leiteinrichtung (54) und vorzugsweise die wenigstens eine Kufe (60, 62, 64) und die Platte (66).

12. Mähdrescher (10) mit einer Axialtrennvorrichtung (24) nach einem der vorhergehenden Ansprüche.

## Claims

1. An axial separating device (24) for an axial combine (10), comprising a drum (50) with a discharge section (41) for discharging crop, and a guiding device (54) for guiding discharged crop, wherein the drum (50) is arranged to be rotated in a rotating direction, the guiding device (54) is mounted at the side of the drum (50) on which the drum (50) moves downwardly when the drum rotates in the rotating direction and is arranged to guide the flow of crop discharged at the side of the drum (50) on which the drum (50) moves downwardly when the drum (50) rotates in the rotating direction, wherein the guiding device (54) is provided with at least one edge (56,57) for guiding the crop, **characterized in that** the edge (56, 57) is formed such that a degree of effect of the guiding device (54) varies successively with the angle under which the crop is discharged by the drum (50) .

2. Axial separating device according to claim 1, **characterized by** a bottom (58) mounted below the discharge section (41), on which at least one vane (60, 62, 64) or guide foil for guiding the crop is mounted.

3. Axial separating device according to claim 2, **characterized in that** the vane (60, 62, 64) is supplied with crop guided by the guiding device (54).

4. Axial separating device according to one of the preceding claims, **characterized in that** the drum (50) is provided with an infeed section (38) and/or a threshing section (39) and/or a separating section (40).

5. Axial separating device according to claim 4, **characterized in that** the drum (50) is provided in the discharge section (41) with the same crop engaging elements (52) as in the separating section (40).

6. Axial separating device according to one of the preceding claims, **characterized in that** the guiding device (54) is triangular.

7. Axial separating device according to one of the preceding claims, **characterized in that** the guiding device (54) is provided with two edges (56, 57), one located above the other, enclosing an angle, wherein the upper edge (56) is preferably steeper than the lower edge (57).

8. Axial separating device according to claim 7, **characterized in that** the bottom (58) is provided with a second vane (62), that the first vane (60) guides crop flowing over the first edge (56), and that the second vane (62) guides crop flowing over the second edge (57).

9. Axial separating device according to one of the preceding claims, **characterized by** a plate (66) which receives crop upwardly discharged by the rotor (50).

10. Axial separating device according to claim 9, **characterized in that** the bottom (58) is provided with a third vane (64) located between the second vane (62) and the plate (66), in order to guide crop discharged at the bottom side of the discharge section (41).

11. Axial separating device according to one of the preceding claims, **characterized in that** crop is fed from the discharge section (41) to a discharge beater (34), guided by the guiding device (54) and preferably the at least one vane (60, 62, 64) and the plate (66).

12. A combine with an axial separating device according to one of the preceding claims.

## Revendications

1. Dispositif séparateur à écoulement axial (24) pour une moissonneuse-batteuse (10), avec un tambour (50) rotatif dans un sens de rotation, qui comprend un segment d'évacuation (41) pour l'évacuation du produit de la récolte, et avec un dispositif de guidage (54) pour la conduite du produit de la récolte évacué situé sur le côté du tambour (50) et sur lequel le tambour (50) se déplace vers la partie inférieure, lorsqu'il tourne dans le sens de rotation, et est installé, pour conduire le flux du produit de la récolte qui est évacué sur le côté du tambour (50) sur lequel le tambour (50) se déplace vers la partie inférieure, lorsque le tambour (50) tourne dans le sens de rotation, dans lequel le dispositif de guidage (54) comprend au moins une face (56, 57) pour la conduite du produit de la récolte, **caractérisé en ce que** la face (56, 57) est formée de telle sorte qu'un rendement variable successif du dispositif de guidage (54) résulte de l'angle d'éjection en fonction duquel le produit de la récolte est éjecté par le tambour (50).

2. Dispositif séparateur à écoulement axial (24) selon la revendication 1, **caractérisé par** un plancher (58) disposé sous le segment d'évacuation (41) sur lequel au moins un patin (60, 62, 64) et/ou une tôle de guidage sont installés pour la conduite du produit de la récolte éjecté.

3. Dispositif séparateur à écoulement axial (24) selon la revendication 2, **caractérisé en ce que** le patin (60, 62, 64) réceptionne le produit de la récolte conduit par le dispositif de guidage (54).

4. Dispositif séparateur à écoulement axial (24) selon l'une quelconque des revendications précédentes, **caractérisé en ce que** le tambour (50) est équipé d'un segment de chargement (38) et/ou d'un segment de rotation (39) et/ou d'un segment de séparation (40).

5. Dispositif séparateur à écoulement axial (24) selon la revendication 4, **caractérisé en ce que** le tambour (50) est doté d'éléments d'entraînement du produit (52) dans le segment d'évacuation (41) et comprend de la même manière des éléments d'entraînement du produit (52) dans le segment de séparation (40).

6. Dispositif séparateur à écoulement axial (24) selon l'une quelconque des revendications précédentes, **caractérisé en ce que** le dispositif de guidage (54) est de forme triangulaire.

7. Dispositif séparateur à écoulement axial (24) selon l'une quelconque des revendications précédentes, **caractérisé en ce que** le dispositif de guidage (54) comprend deux faces (56, 57) superposées formant un angle, dans lesquelles la face supérieure (56) a une position préférentiellement plus raide que la face inférieure (57).

8. Dispositif séparateur à écoulement axial (24) selon la revendication 7, **caractérisé en ce que** le plancher (58) est équipé d'un deuxième patin (62), le premier patin (60) dirigeant le produit de la récolte qui s'écoule de la face supérieure (56), et le deuxième patin (62) dirigeant le produit de la récolte qui s'écoule de la face inférieure (57).

9. Dispositif séparateur à écoulement axial (24) selon l'une quelconque des revendications précédentes, **caractérisé par** une plaque (66) qui réceptionne le produit de la récolte éjecté vers le haut par le tambour (50).

10. Dispositif séparateur à écoulement axial (24) selon la revendication 9, **caractérisé en ce que** le plancher (58) est équipé d'un troisième patin (64) situé entre le deuxième patin (62) et la plaque (66) pour diriger le produit de la récolte sortant sur la face inférieure du segment d'évacuation (41).

11. Dispositif séparateur à écoulement axial (24) selon l'une quelconque des revendications, **caractérisé en ce que** le produit de la récolte est amené par le segment d'évacuation (41) d'un tambour de distribution (34), dirigé par le dispositif de guidage (54) et préférentiellement au moins un patin (60, 62, 64) et la plaque (66).

12. Moissonneuse-batteuse (10) avec un dispositif séparateur à écoulement axial (24) selon l'une quelconque des revendications précédentes.
